# EUROPÄISCHE PATENTSCHRIFT

(11) **EP 0 390 155 B1**
(45) Veröffentlichungstag und Bekanntmachung des Hinweises auf die Patenterteilung: **03.02.1993**
(21) Anmeldenummer: 90106046.7
(22) Anmeldetag: 29.03.1990
(51) Int. Cl.: F16C 29/06, F16C 43/06

(54) **Linearkugelbüchse mit Kugeleinfüllausnehmungen**
Linear ball bearing with ball fill recesses
Palier linéaire à billes avec creux de remplissage pour billes

(30) Priorität: 31.03.1989 DE 3910456
(43) Veröffentlichungstag der Anmeldung: 03.10.1990
(73) Patentinhaber: Deutsche Star GmbH, 97424 Schweinfurt (DE)
(72) Erfinder: Binder, Manfred, D-8720 Schweinfurt (DE); Reuss, Karl-Heinz, D-8741 Unterelsbach (DE); Höfling, Rainer, D-8725 Arnstein (DE)
(74) Vertreter: Weickmann, Heinrich, Dipl.-Ing.

(56) Entgegenhaltungen:
- DE-A- 2 626 399
- DE-U- 7 835 003
- FR-A- 2 075 227
- FR-A- 2 255 497
- FR-A- 2 291 407
- FR-A- 2 335 727
- FR-A- 2 346 596
- GB-A- 2 174 153

## Beschreibung

Die Erfindung betrifft eine Linearkugelbüchse umfassend einen Käfig mit einer Käfigachse und mit einer Mehrzahl von Kugelumläufen,
wobei jeder Kugelumlauf zwei zur Käfigachse im wesentlichen parallele Geradkugelreihen, nämlich eine Tragkugelreihe und eine Rücklaufkugelreihe und zwei die beiden Geradkugelreihen verbindende Bogenkugelreihen aufweist,
wobei weiter mindestens eine Geradkugelreihe eines Kugelumlaufs nach radial aussen an einer Laufplatte anliegt, welche in eine zugehörige Ausnehmung des Käfigs eingesetzt ist und eine Aussenfläche zur Anlage an einer Innenumfangsfläche einer den Käfig aufnehmenden Lagergehäusebohrung besitzt,
wobei weiter an einer Innenfläche der Laufplatte ein Geradlaufbahnabschnitt für mindestens eine Geradkugelreihe des jeweiligen Kugelumlaufs ausgebildet ist und
wobei die jeweilige Tragkugelreihe nach radial innen einen Schlitz des Käfigs teilweise durchdringt, um an einer von dem Käfig zumindest teilweise umschlossenen Welle Anlage nehmen zu können.

Eine solche Linearkugelbüchse ist beispielsweise durch die GB-A-2 174 153 bekannt geworden. Bei dieser bekannten Linearkugelbüchse sind keinerlei besondere Maßnahmen zu dem Zweck dargestellt oder beschrieben, die Kugeln nach dem Einbau der Laufbahnplatten in den Käfig einzufüllen.
Bei einer solchen Linearkugelbüchse besteht das Problem des Einfüllens der Kugeln in den jeweiligen Kugelumlauf. Dieses Problem lässt sich beispielsweise so lösen, dass die Kugeln nach Einbau der Laufplatten durch nach radial auswärts offene Schlitze des Käfigs in die jeweilige Rücklaufkugelreihe eingedrückt werden. Eine andere Lösungsmöglichkeit besteht darin, dass man die Kugeln vor Einbau der jeweiligen Laufplatte in den jeweiligen Kugelumlauf einfüllt und die Laufplatte erst nachträglich anbringt.

In der deutschen Gebrauchsmusterschrift 78 35 003 ist eine Linearkugelbüchse beschrieben, bei der sich zu beiden Seiten der die Tragkugelreihe nach radial einwärts sichernden Käfiglippen Ausnehmungen im Käfigmaterial befinden und zwar nahe einem axialen Ende der Tragkugelreihe. Durch diese Ausnehmungen werden die Lippen nachgiebig gemacht. Die Kugeln können dann mit einer automatischen Einfüllvorrichtung von innen nach aussen in die Tragkugelreihe eingedrückt werden. Da die Einführung der Kugeln vom Innenraum des Käfigs her erfolgt, dieser Innenraum aber entsprechend dem jeweiligen Wellendurchmesser begrenzt ist, muss ein kompliziertes Einfüllrohr mit mehreren Umlenkbögen verwendet werden. Durch das Auffedern der Lippen beim Einfüllen der Kugeln besteht die Gefahr, dass dort Druckstellen entstehen, die den Kugelablauf stören.

Der Erfindung liegt die Aufgabe zugrunde, bei einer Linearkugelbüchse der eingangs bezeichneten Art das Einführen der Kugeln zu erleichtern und insbesondere den Einsatz einer automatischen Einfüllvorrichtung zu ermöglichen und dabei die Gefahr einer Störung des Kugelumlaufs im Betrieb herabzusetzen oder zu vermeiden.

Zur Lösung dieser Aufgabe wird vorgeschlagen, dass die Ausnehmung des Käfigs zumindest an einem ihrer Enden und annähernd in Flucht mit einer Geradlaufbahn des Käfigs eine Füllschräge besitzt, und/oder dass die Laufplatte an ihrer Innenfläche im Bereich mindestens eines ihrer Enden in annähernder Flucht mit dem einen Geradlaufbahnabschnitt eine Füllabschrägung besitzt, wobei diese Füllschräge und/oder diese Füllabschrägung das Einfüllen von Kugeln in den einen Geradlaufbahnabschnitt dann gestatten, wenn die Laufplatte an diesem einen Ende aus der Ausnehmung ganz oder teilweise ausgehoben ist.

Bei der erfindungsgemässen Ausbildung brauchen die Laufplatten an ihrem der jeweiligen Einfüllstelle zugekehrten Ende nur noch um ein geringes Maß ausgekippt zu werden, so dass sich die Kugeln beim Einfüllen zwangsläufig hintereinander einordnen. Der Abstand zwischen dem jeweiligen Laufbahngrund und der Laufplatte bleibt so klein, dass sich nicht zwei Kugeln übereinander schieben und sich gegenseitig verklemmen können. Damit ist sichergestellt, dass die Kugeln in der richtigen Zahl in den jeweiligen Kugelumlauf eingeführt werden und dass die Laufplatten anschliessend in die Betriebsstellung zurückgeklappt werden können.

Um eine automatische Montage der Linearkugelbüchse zu erleichtern und Fehlorientierungen des Käfigs bzw. der Laufplatten zu vermeiden, wird weiter vorgeschlagen, dass an beiden Enden der Ausnehmung Füllschrägen und/oder dass an beiden Enden der Laufplatte an deren Innenseite Füllabschrägungen vorgesehen sind.

Der Erfindungsgedanke ist anwendbar, gleichgültig ob an der Innenfläche der Laufplatte nur ein Geradlaufbahnabschnitt oder eine geschlossene Laufbahn ausgebildet ist.

Wenn an der Innenfläche der Laufplatte nur ein tragender Laufbahnabschnitt für die Tragkugelreihe angebracht ist, so wird die Füllschräge und/oder die Füllabschrägung in Flucht mit dieser tragende Geradlaufbahn bzw. mit diesem tragenden Geradlaufbahnabschnitt angebracht.

Wenn andererseits an der Innenfläche der Laufbahnplatte eine geschlossene Laufbahn ausgebildet ist mit einem tragenden Geradlaufbahnabschnitt für die Tragkugelreihe, mit einem Geradlaufbahnabschnitt für die Rücklaufkugelreihe und mit zwei die beiden Geradlaufbahnabschnitte verbindenden Bogenlaufbahnabschnitten, so empfiehlt es sich, dass die Füllschräge und/oder die Füllabschrägung in axialer Flucht mit der rückführenden Geradlaufbahn bzw. mit dem rückführenden Geradlaufbahnabschnitt angeordnet sind, weil in dem rückführenden Geradlaufbahnabschnitt die Kugeln in der Regel grössere Führungsfreiheit besitzen und insbesondere weil der rückführende Geradlaufbahnabschnitt, bezogen auf die Achse des Käfigs, radial weiter nach aussen gelegt ist, so dass mit einem geringeren Auskippwinkel der Laufplatte bereits eine Füllung möglich ist.

Aus fertigungstechnischen Gründen bei der Herstellung der Laufplatten empfiehlt es sich, dass geradlinige Verlängerungen der Geradlaufbahnabschnitte bis an die Enden der Laufplatte im wesentlichen profilkonstant fortgesetzt sind unter Verschneidung mit den Bogenlaufbahnabschnitten. Diese geradlinigen Verlängerungen des jeweils zu füllenden Geradlaufbahnabschitts bringen in Verbindung mit der Füllschräge bzw. der Füllabschrägung eine weitere Erleichterung des Einfüllens der Kugeln.

Die Erfindung betrifft weiter ein Verfahren zum Einfüllen der Kugeln in einen Kugelumlauf einer Linearkugelbüchse, wobei die Linearkugelbüchse nach einem der Ansprüche 1 bis 8 ausgebildet ist,

Dabei wird zum Füllen in der Weise vorgegangen, dass die Kugeln bei einendig aus der Ausnehmung ausgekippter Laufplatte über eine Füllschräge am offenen Ende der Ausnehmung und/oder eine Füllabschrägung am ausgekippten Ende der Laufplatte hinweg in jeweils eine Geradlaufbahn eingeführt werden und dass nach Vervollständigung der Kugeln des Kugelumlaufs die Laufplatte in Betriebsstellung zurückgekippt und in der Betriebsstellung gesichert wird.

Es wird darauf hingewiesen, dass die Füllschrägen und die Füllabschrägungen derart bemessen sind, dass der Kugelablauf nicht gestört wird, d.h. dass alle notwendigen Kugelführungsflächen am Käfig sowohl als auch in der Laufplatte erhalten bleiben.

Ein besonderer Vorteil liegt darin, dass während des Kugelfüllvorgangs das von der Einfüllstelle abgelegene Ende der Laufplatte annähernd in Betriebsstellung innerhalb der Ausnehmung gehalten werden kann. Dies erleichtert es, die jeweilige Laufplatte bei dem Füllvorgang in der richtigen Lage zu halten.

Wenn die Laufplatten in dem Käfig betriebsmässig durch topfförmige Endringe gehalten sind, so kann man für das Einfüllen der Kugeln zunächst nur einen topfförmigen Endring anbringen, um die Laufplatten zunächst nur an ihren von der Füllstelle abgelegenen Enden festzuhalten und in den füllstellennahen Enden auskippen zu können. Nach dem Einfüllen der Kugeln wird dann der den Eingriffstellen nahe topfförmige Endring angebracht, nachdem vorher die Laufplatten in ihre Betriebsstellung zurückgekippt worden sind.

Die beiliegenden Figuren erläutern die Erfindung anhand eines Ausführungsbeispiels. Es stellen dar: zur Darstellung des technischen Gesamtzusammenhangs
Figur 1 einen Längsschnitt durch eine erfindingsgemässe Linearkugelbüchse;
Figur 2 einen Querschnitt nach Linie II - II der Figur 1;
Figur 3 eine Ansicht der Innenseite einer Laufplatte;
Figur 4 eine Endansicht einer Laufplatte gemäss Figur 3;
Figur 5 einen Schnitt nach Linie V - V der Figur 3;
Figur 6 eine Vergrösserung des Bereichs VI der Figur 5 in einem Schnitt entsprechend demjenigen der Figur 5;
Figur 7 eine Vergrösserung eines Endabschnitts der Laufplatte gemäss Figur 3;
Figur 8 einen Schnitt nach Linie VIII - VIII der Figur 7;
Figur 9 einen Schnitt nach Linie IX - IX der Figur 7;
Figur 10 einen Schnitt nach Linie X - X der Figur 8;
Figur 11 einen Schnitt nach Linie XI - XI der Figur 8;
Figur 12 einen Niveauplan mit tabellarischer Erfassung der Sohlenniveaus der Laufbahn in einem Endabschnitt der Laufplatte gemäss Figur 7; zur Darstellung der eigentlichen Erfindung
Figur 13 einen Querschnitt durch einen Käfig entlang Linie II - II der Figur 1, jedoch nach Entfernung der Laufplatten und Kugeln;
Figur 14 ein Detail zu Figur 13 in Vergrösserung;
Figur 15 eine Teilansicht des Käfigs in Pfeilrichtung XV der Figur 13;
Figur 16 einen Längsschnitt durch den Käfig nach Linie XVI - XVI der Figur 13;
Figur 17 einen Längsschnitt nach Linie XVII - XVII der Figur 13;
Figur 18 eine Teilansicht einer Laufplatte entsprechend Figur 7, jedoch mit einer Endabschrägung;
Figur 19 einen Schnitt nach Linie XIX - XIX der Figur 15 beim Einfüllen von Kugeln;
   und wiederum zur Darstellung des Gesamtzusammenhangs
Figur 20 einen Schnitt durch ein Linearkugellager gemäss Figur 1, jedoch insofern abgewandelt, als der Käfig zur Aufnahme einer Unterstützung für die Welle teilringförmig ausgebildet ist;
Figur 21 ein Detail entsprechend der Stelle XXI der Figur 20 in Vergrösserung;
Figur 22 eine Endansicht eines Linearkugellagers gemäss Figur 20, wobei ein ebenfalls teilringförmiger , topfringförmiger Endring abgenommen ist;
Figur 23 eine Vergrösserung des Details XXIII der Figur 22;
Figur 24 einen Schnitt nach Linie XXIV - XXIV der Figur 23;
Figur 25 einen Schnitt nach Linie XXV - XXV der Figur 23;
Figur 26 eine Teilansicht in Richtung des Pfeiles XXVI der Figur 22, teilweise geschnitten;
Figur 27 eine Längsdichtungsleiste als Detail zur Figur 26 und
Figur 28 eine Darstellung der Laufplatte entsprechend Figur 6.

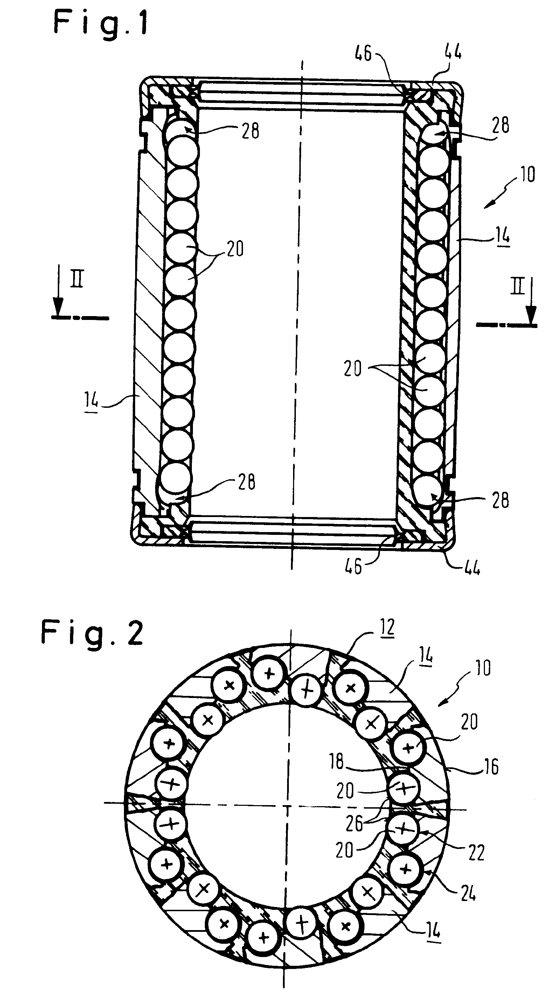

In Figur 1 und 2 ist eine Linearkugelbüchse ganz allgemein mit 10 bezeichnet. Sie umfaßt einen Käfig 12 aus hartelastischem Kunststoff. In diesen Käfig 12 sind Laufplatten 14 eingesetzt, welche jeweils eine Außenumfangsfläche 16 zur Anlage an einer die Linearkugelbüchse 10 aufnehmenden Lagergehäusebohrung und eine Innenumfangsfläche 18 besitzen. Die Laufplatten 14 bestehen aus einem harten Werkstoff, insbesondere gehärtetem Stahl. Durch den Käfig 12 und die Laufplatten 14 ist jeweils eine Führung für einen Kugelumlauf gebildet. Die Kugeln sind mit 20 bezeichnet. Jeder Kugelumlauf bildet eine Tragkugelreihe 22 und eine Rücklaufkugelreihe 24. Die Tragkugelreihen 22 ragen durch Schlitze 26 des Käfigs 12 hindurch nach radial innen zur Anlage an einer nicht dargestellten Welle. Die Rücklaufkugelreihen 24 sind nach radial innen durch den Käfig 12 gestützt. Beide Geradkugelreihen 22 und 24 liegen an der Innenumfangsfläche 18 der jeweiligen Laufplatte 14 an. Die Tragkugelreihe 22 und die Rücklaufkugelreihe 24 sind jeweils durch Bogenkugelreihen 28 verbunden. Die Laufplatten 14 sind in dem Käfig 12 formschlüssig gehalten, jedoch mit einem gewissen Bewegungsspiel.

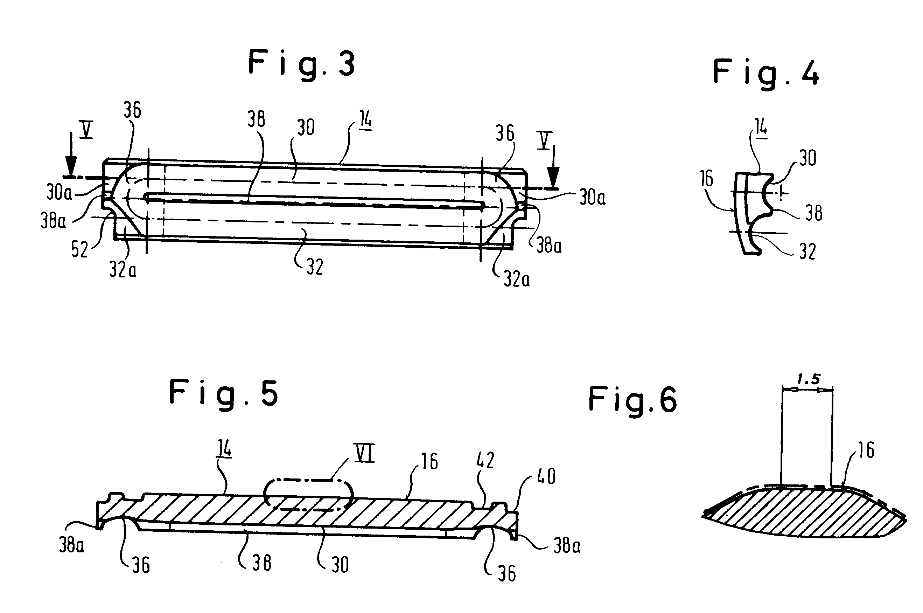

In Figuren 3, 4 und 5 ist eine Laufplatte 14 im einzelnen dargestellt. Diese Laufplatte 14 ist auf der Basis eines Profilstabs hergestellt, dessen Profil aus Figur 4 ersichtlich ist. Die Laufplatte 14 weist einen tragenden Geradlaufbahnabschnitt 30 auf, welcher gegenüber der Außenumfangsfläche 16 ein erstes höheres Niveau besitzt und einen rückführenden Geradlaufbahnabschnitt 32, welcher gegenüber der Außenumfangsfläche 16 ein niedrigeres Niveau besitzt. Der tragende Laufbahnabschnitt 30 dient zur Aufnahme der Tragkugelreihe 22 und der Geradlaufbahnabschnitt 32 zur Aufnahme der Rücklaufkugelreihe 24. Die beiden Geradlaufbahnabschnitte 30 und 32 sind durch Bogenlaufbahnabschnitte 36 miteinander verbunden. Die Geradlaufbahnabschnitte 30 und 32 erstrecken sich jedoch mit den Endabschnitten 30a bzw. 32a im wesentlichen profilkonstant bis an die Enden der Laufplatte 14. Zwischen den Geradlaufbahnabschnitten 30 und 32 liegt eine Mittelrippe 38. Die Mittelrippe 38 setzt sich mit Endabschnitten 38a bis an die Enden der Laufplatte 14 profilkonstant fort und ist durch die Bogenlaufbahnabschnitte 36 lediglich unterbrochen. An ihrer Aussenumfangsfläche 16 ist die Laufbahnplatte, wie in Figur 6 dargestellt, gekrümmt, so daß sie schaukelnd an der Innenumfangsfläche einer Lagergehäusebohrung zur Anlage kommt. Wie aus Figur 4 ersichtlich sind die Geradlaufbahnabschnitte 30 und 32 gerundet mit einem Krümmungsradius, der gleich oder wenig größer ist als der Radius der Kugeln 20.

In Figur 5 erkennt man an den Enden der Laufplatte Ausdrehungen 40 und 42. Die Ausdrehungen 40 sind zur Aufnahme von topfförmigen Endringen 44 (Figur 1) bestimmt, welche die Laufplatte 14 und Abschlußscheiben 46 am Käfig 12 sichern. Die Eindrehungen 42 sind dazu bestimmt, Sicherungsringe zur axialen Sicherung der Kugelbüchse in einer Aufnahmebohrung aufzunehmen.

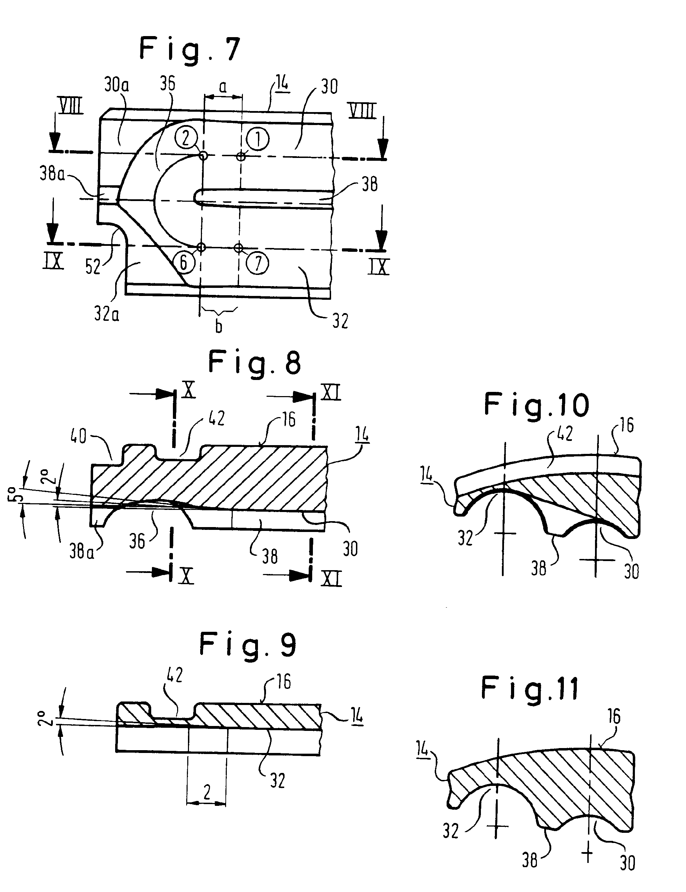

Nähere Einzelheiten über die Ausbildung der Laufbahnen ergeben sich aus den Figuren 7 bis 11. Die Bogenlaufbahnabschnitte 36 erstrecken sich über annähernd 180° und sind annähernd kreisförmig gekrümmt. Der Niveauabfall von dem Geradlaufbahnabschnitt 30 zu dem Geradlaufbahnabschnitt 32 beginnt bereits in einem Endabschnitt a des Geradlaufbahnabschnitts 30. Dadurch liegt die Sohle des Bogenlaufbahnabschnitts 36 im Bereich der Verschneidung mit dem Geradlaufbahnabschnitt 30 tiefer als eine gedachte Fortsetzung der Sohle des Geradlaufbahnabschnitts 30 ,und eine Seitenführung der Kugeln ist auch in diesem Verschneidungsbereich gewährleistet Das Niveaugefälle im Endabschnitt a ist durch die Winkelangabe 2° in Figur 8 dargestellt. Das Niveaugefälle im unmittelbar anschließenden Bereich des Bogenlaufbahnabschnitts 36 beträgt, wie in Figur 8 ebenfalls dargestellt, ca. 5°. Es treten keine Niveausprünge auf. Die Gefällsübergänge sind abgerundet Die Längsausdehnung des Endabschnitts a ist auch nach dem Schleifen so groß, daß die belasteten Kugeln vor Einlauf in den Bogenlaufbahnabschnitt 36 kontinuierlich entlastet werden können. Dies gilt analog auch für die in die Lastzone eintretenden Kugeln. Durch diese Maßnahme ist ein gleichmäßiger und ruckfreier Ablauf gewährleistet. An der Stelle ⑥ in Figur 7 besitzt die Bogenlaufbahn 36 ein Niveauminimum, welches unter dem Niveau der rückführenden Geradlaufbahn 32 liegt. Im Endabschnitt b des rückführenden Geradlaufbahnabschnitts 32 findet ein langsamer Niveauanstieg statt. Es treten keine Niveausprünge auf. Die Gefällsübergänge sind verrundet. Das Niveauminimum ⑥ ist auch nach dem Schleifen des rückführenden Geradlaufbahnabschnitts 32 noch vorhanden. Die Gefällsstrecken a und b der Geradlaufbannabschnitte 30, 32 sind zusammen mit den Bogenlaufbahnabschnitten 36 geprägt. Die Verjüngung der Rippenbreite der Mittelrippe 38 im Bereich der Endabschnitte a und b ergibt einen trichterförmigen Übergang des Bogenlaufbahnabschnitts 36 in die Geradlaufbahnabschnitte 30 und 32.

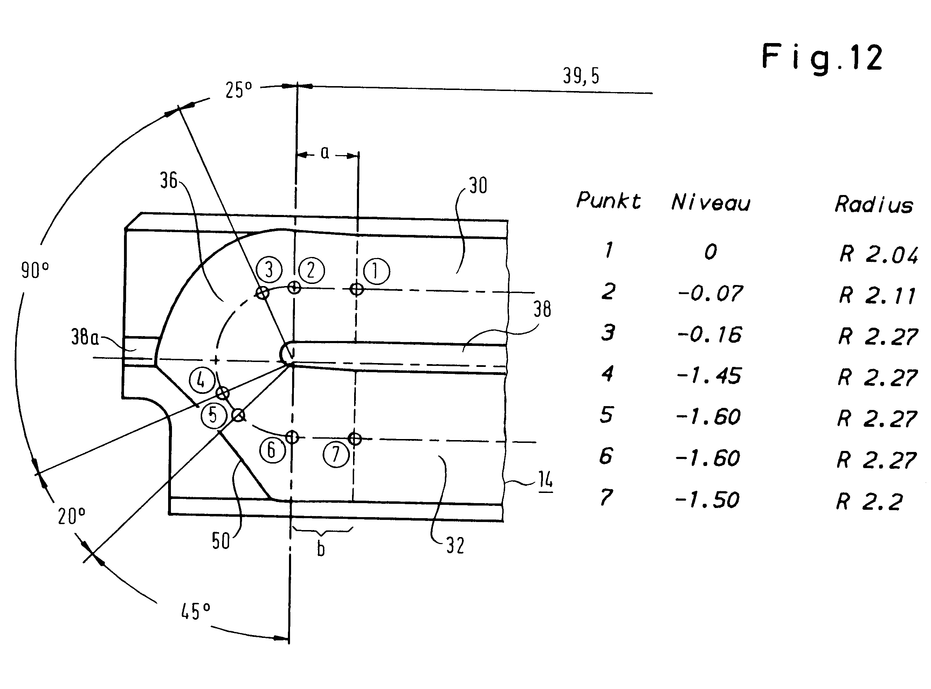

In Figur 12 sind mit ① bis ⑦ verschiedene Meßpunkte bezeichnet, die teilweise auch in Figur 7 eingetragen wurden, um die Relationen zwischen Figur 7 und 12 klar zu machen. Diesen Meßpunkten sind nach der Tabelle der Figur 12 verschiedene Niveauwerte beispielshalber zugeordnet. Die Niveauwerte bezeichnen die relative Niveauhöhe in Millimeter jeweils auf der Sohle der Laufbahn gegenüber dem Sohlenniveau des tragenden Laufbahnabschnitts 30, welches mit Null bewertet ist.

Man erkennt aus der zweiten Spalte der Tabelle ohne weiteres, daß im Bereich ⑤ bis ⑥ ein Niveauminimum vorliegt, und daß von diesem Niveauminimum aus ein Anstieg des Niveaus bis auf die Niveauhöhe der Sohle des rückführenden Geradlaufbahnabschnitts 32 stattfindet. Der Wiederanstieg ⑥ bis ⑦ liegt im wesentlichen in der Rücklaufgeraden des rückführenden Geradlaufbahnabschnitts 32. Den einzelnen Punkten ① bis ⑦ zugeordneten Ortskoordinaten sind durch die Winkelwerte in der Figur 12 bezeichnet. Die Figur 12 vermittelt durch die Längenangabe 39,5 mm auch eine Größenordnungsvorstellung von der Länge der Kugelbüchse. Ergänzend hierzu sei bemerkt, daß der Außendurchmesser des Käfigs 12 im Beispielsfall 40 mm beträgt, daß insgesamt 10 Laufplatten vorgesehen sind, wie in Figur 2 dargestellt, daß die periphere Erstreckung einer Laufplatte 9,7 mm beträgt, und daß der Kugeldurchmesser 3,969 mm beträgt. Schließlich beträgt der Krümmungsradius der Laufbahn an der Sohle gemessen (strichpunktierte Linie in Figur 12) 2,04 mm. In der Tabelle sind schließlich in der vierten Spalte die jeweiligen Radien der Laufbahnabschnitte in Millimetern aufgezeichnet. Man erkennt, daß diese Radien wenig größer sind als der Kugelradius, so daß die Kugeln seitlich geführt sind. Aus der Figur 12 und der Tabelle erkennt man, daß im Bereich ① bis ④ eine Seitenführung gewährleistet ist; diese Seitenführung ist im Scheitelbereich ④ durch den Fortsatz 38a der Rippe 38 ergänzt. Auch in dem relativ unkritischen Bereich ④ bis ⑦ ist noch eine gewisse Seitenführung der Kugeln durch die Laufplatte gewährleistet, wie durch die Verschneidungslinie 50 angedeutet. Es sei noch einmal erwähnt, daß die einzelnen Gefällsstrecken von ① bis ⑦ im wesentlichen stetig ineinander übergehen.

Die Führung der Kugeln ist durch den Käfig 12 ergänzt. Die Führungsflächen in dem Käfig 12 sind mit hoher Präzision so gefertigt, daß sie an die Führungsflächen der Laufplatten versatzlos anschliessen.

Die in den Figuren 3 und 7 erkennbaren Aussparungen 52 dienen zum Teil der Materialaufnahme beim Prägen der Bogenlaufbahnabschnitte 36; anders ausgedrückt: Beim Prägen werden die Laufplatten 14 mit vorher gebildeten Aussparungen in Prägeformen eingelegt, welche der Außenumfangsfläche 16 und den Endflächen anliegen, jedoch im Bereich der Aussparungen 52 so viel Luft lassen, daß das beim Prägen verdrängte Material einfließen kann und dabei die Geometrie der Aussparungen gemäß Figur 7 entsteht.

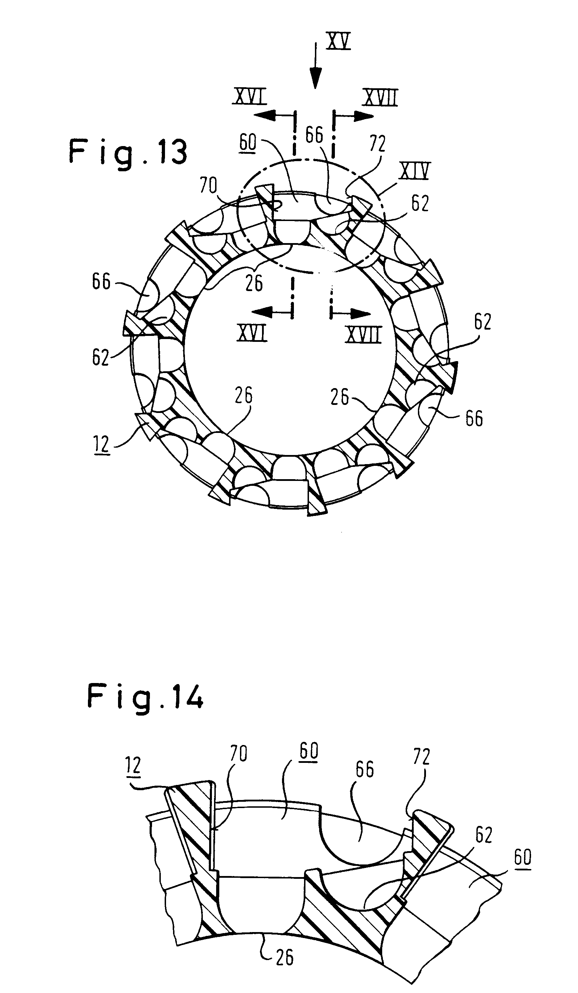

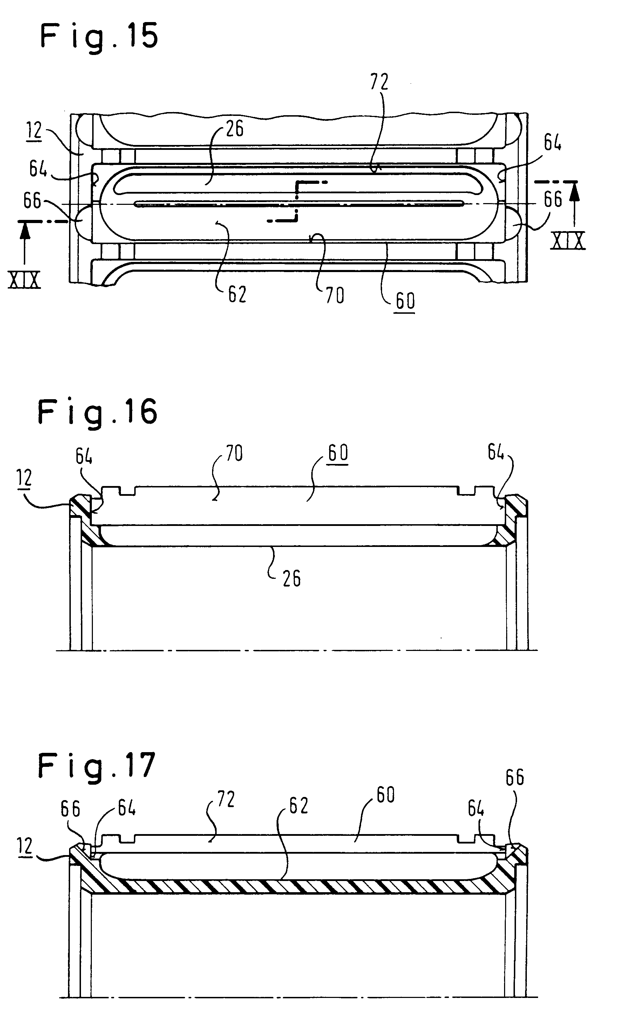

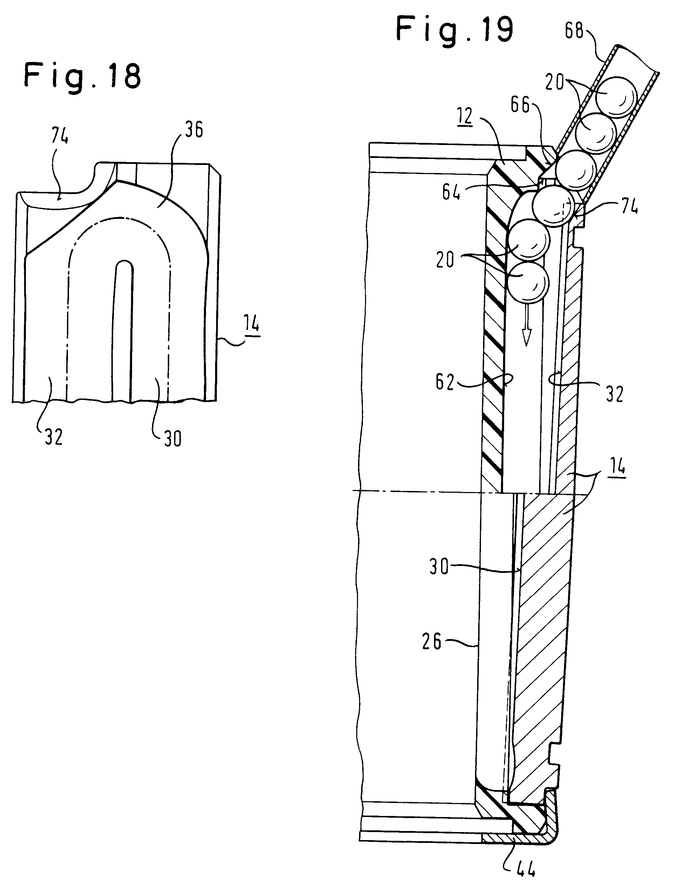

In Figur 13 ist der Käfig gemäss Figur 2 nach Entnahme der Laufplatten 14 und der Kugeln 20 dargestellt. Man erkennt dort die Ausnehmungen 60 für die Aufnahme der Laufplatten 14 der Figur 2. Man erkennt weiter die Schlitze 26, welche den Kugeln der Tragkugelreihe (22) teilweisen Durchtritt gewähren und man erkennt die Laufbahn 62 für die Rücklaufkugelreihe 24 der Figur 2. Dies alles ist in Vergrösserung auch in Figur 14 dargestellt. Man erkennt weiter aus den Figuren 14 und 15, dass an den Enden der Ausnehmungen 60, und zwar angrenzend an die Endflächen 64 der Ausnehmungen 60 annähernd in Flucht mit den Laufbahnen 62 rinnenförmige Füllschrägen 66 angeordnet sind, deren Bedeutung insbesondere aus Figur 19 zu ersehen ist. Dort wird zum Einfüllen der Kugeln 20 eines Kugelumlaufs ein Füllrohr 68 angesetzt, so dass es annähernd in Fortsetzung der jeweiligen Füllschräge 66 steht. Dabei ist der obere topfförmige Endring 44 abgenommen, während der untere topfförmige Endring 44 seine Sicherungsposition bezüglich der Laufplatten 14 einnimmt. Da der obere Endring 44 fehlt, kann die Laufplatte 14, wie aus Figur 19 zu ersehen, schräggestellt werden, so dass sie im Bereich der Einlaufschräge 66 den Kugeln 20 Einlass gewährt. Das Schrägstellen der Laufplatten 14 ist möglich, da die Längsbegrenzungsflächen 70, 72 der Ausnehmung 60 annähernd zueinander parallel sind, oder aber das Kunststoffmaterial des Käfigs 12 derart elastisch ist, dass ein Ausstellen der Laufplatte 14 unter Zwang möglich ist.

Das Einfüllen der Kugeln 20 in die Laufbahn 62 der Rücklaufkugelreihe wird noch dadurch erleichtert, dass an der Innenseite der Laufplatte 14, wie aus Figuren 18 und 19 ersichtlich, eine Abschrägung 74 angebracht ist.

Es ist zu bemerken, dass die Art des Einfüllens unter Verwendung der Einfüllschräge 66 und der Abschrägung 74 nicht daran gebunden ist, das an der Laufplatte 14 die beiden Geradlaufbahnabschnitte 30,32 und die Bogenlaufbahnabschnitte 36 angebracht sind. Die Art des Einfüllens wäre vielmehr auch dann denkbar, wenn die Laufplatten 14 auf die Breite der Geradlaufbahnabschnitte 30 der Tragkugelreihen beschränkt wären. In diesem Fall müßten nur die Einfüllschrägen 66 und die Abschrägungen 74 in Flucht mit dem jeweiligen Geradlaufbahnabschnitt 30 einer tragenden Kugelreihe angebracht werden.

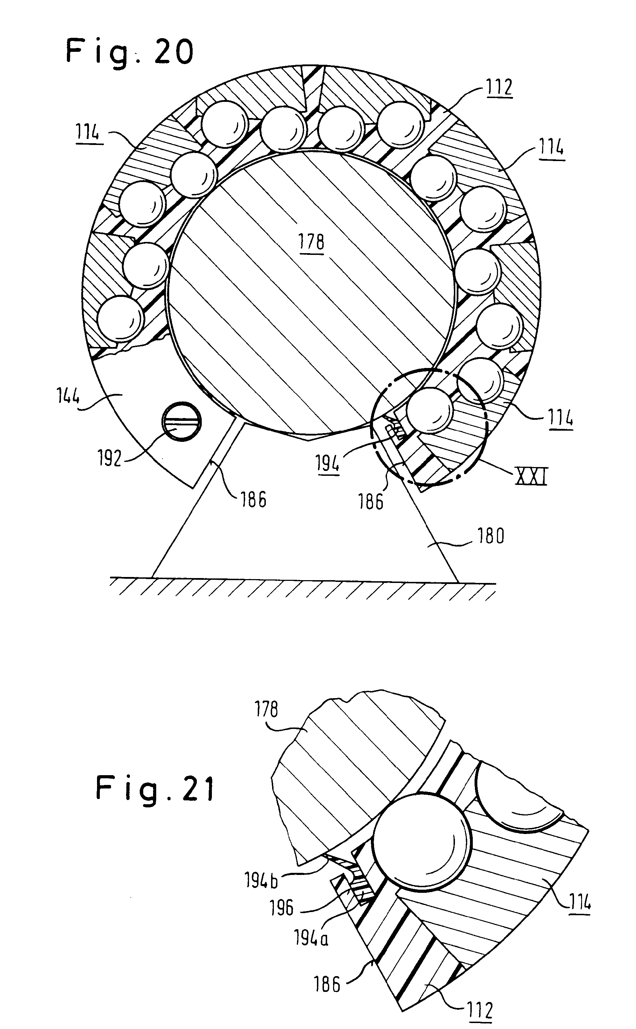

In Figur 20 erkennt man ein Linearkugellager, bei dem die Welle 178 durch Ständer 180 unterstützt und der Käfig 112 teilringförmig ausgebildet ist. Der Käfig ist an seinen Enden wieder mit Endringen 144 versehen, welche entsprechend der Umfangserstreckung des Käfigs 112 teilringförmig ausgebildet sind. Zur Verhinderung des Eindringens von Schmutz in den Bereich der Kugeln sind Dichtungen vorgesehen.

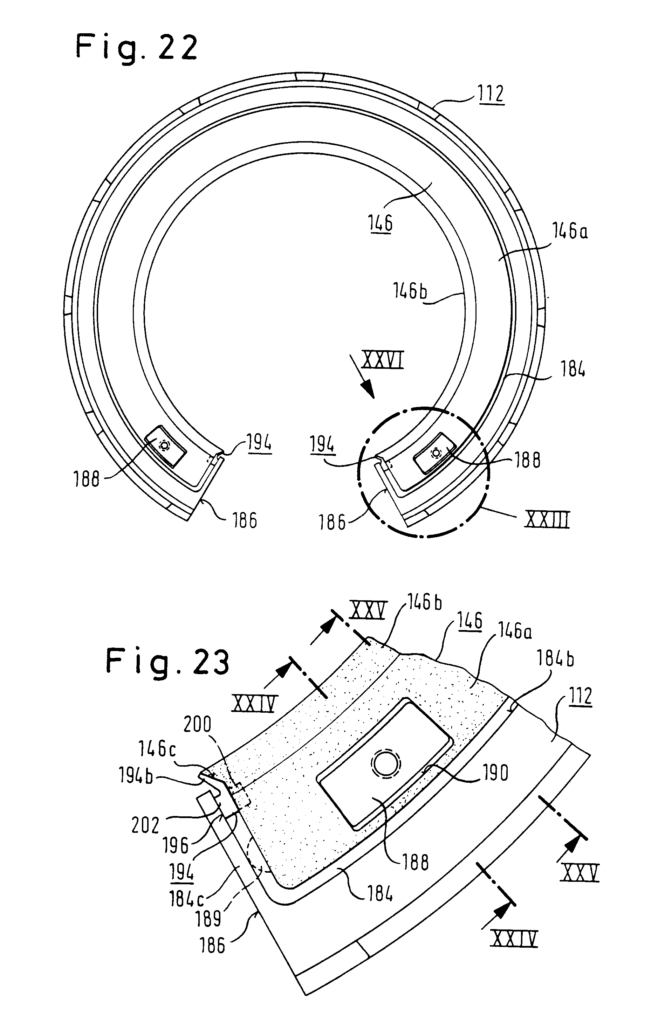

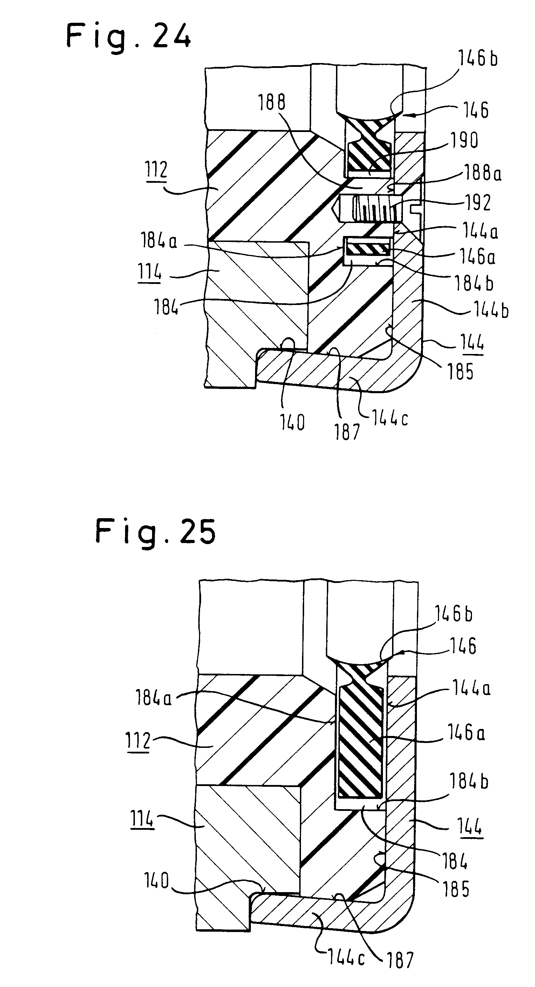

In Figur 1 war auf die Abschlußscheiben 46 hingewiesen worden. Dies sind dort die notwendigen Ringdichtungen, die am Käfig durch Endringe 44 gehalten sind und mit einer Dichtlippe an der dort nicht eingezeichneten Welle zur Anlage kommen. Dieser Dichtringe bedarf es auch bei der nunmehr diskutierten Ausführungsform nach Figur 20, und man erkennt diese Dichtringe in den Figuren 22 bis 25, wo sie mit 146 bezeichnet sind und sich zusammensetzen aus einem jeweiligen Grundkörper 146a und einer Dichtlippe 146b. Die Dichtlippe 146b ist auch hier wieder zur Anlage an der Welle 178 der Figur 20 bestimmt. Der Grundkörper 146a des Dichtrings 146 ist dabei, wie insbesondere aus Figuren 23, 24 und 25 zu ersehen, in einer Ringausnehmung 184 einer Endfläche 185 des Käfigs 112 aufgenommen, welche durch eine axial gerichtete Fläche 184a und eine radial einwärts gerichtete Fläche 184b definiert und an ihren Enden durch Endleisten 184c begrenzt ist. Der Grundkörper 146a liegt mit axialem Spiel zwischen der axial gerichteten Fläche 184a des Käfigs 112 und einer axial gerichteten Fläche 144a des auf der Endfläche 185 aufliegenden Endrings 144. Das Übermaß der Ausnehmung 184 gegenüber dem Durchmesser des Grundkörpers 146a (Figur 25) gewährt dem Grundkörper 146a radiales Spiel innerhalb der Ausnehmung 184. Dieses radiale Spiel besteht auch bei der Ausführungsform nach Figur 1, ist auch dort von wesentlicher Bedeutung, ist aber dort bisher nicht erwähnt worden. Das radiale Spiel ist notwendig, um bei einer Winkelverstellung der Welle 178 gegenüber dem Käfig 112 eine Anpassung des Dichtungsrings 146 an die veränderte Geometrie zu ermöglichen. Während nun bei der Ausführungsform nach den Figuren 1 bis 13 der Dichtungsring 46 (dort als Abschlussscheibe bezeichnet) kreisförmig geschlossen ist und deshalb in peripherer Richtung beweglich sein darf, ohne dass dies den Lagerbetrieb stört, sind erfindungsgemäss die Dichtungsringe 146 teilringförmig d.h. offen. Es besteht nach wie vor die Notwendigkeit, den Dichtungsringen 146 radiales Spiel zu gestatten, um ihre Anpassung an veränderte Lagergeometrie bei Fluchtverlust zwischen Welle 178 und Käfig 112 zu ermöglichen. Es besteht aber gleichzeitig die Notwendigkeit, eine Verdrehung der Dichtungsringe 146 zu vermeiden, da diese Dichtungsringe 146 im Fall einer Verdrehungsmöglichkeit über die eine oder andere Endfläche 186 des Käfigs (siehe Figur 22) hervortreten bzw. hinter diese zurücktreten könnten.

Um den Dichtungsring 146 in radialer Richtung beweglich zu lassen, ihn in peripherer Richtung aber festzulegen, ist eine Ausbildung vorgesehen, wie sie in Figuren 23 u.24 im Detail dargestellt ist. Über der axialgerichteten Fläche 184a erheben sich Nocken 188, die auch in Figuren 22 und 23 erkennbar sind. Diese Nocken 188 durchsetzen Durchbrechungen 190, wie aus Figuren 23 und 24 zu ersehen. Dabei haben die Durchbrechungen 190 ein radiales Übermaß gegenüber der Radialbreite der Nocken 188, so dass die Dichtungsringe 146 nach wie vor ein radiales Spiel besitzen. Dabei ist zu beachten, dass gemäss Figur 22 die Nocken 188 lediglich in den Endbereichen des Dichtungsrings 146, also nahe den Stützlagern 180 der Figur 20, angebracht sind. Weiter ist zu beachten, dass die Höhe der Nocken 188 gegenüber der axial gerichteten Fläche 184a des Käfigs 112 grösser ist als die axiale Stärke des jeweiligen Grundkörpers 146a. Die Fläche 144a, also die Innenseite des Topfbodens 144b des topfförmigen Endrings 144 liegt gegen die Endfläche 188a des jeweiligen Nockens 188 an und ist dort mit dem Käfig verschraubt. Die Verschraubung erfolgt mittels einer Senkschraube 192, die in den Nocken 188 eingeschraubt ist. Wegen des Übermaßes der axialen Höhe des Nockens 188 gegenüber der axialen Dicke des Grundkörpers 146 wird auch bei straffem Anziehen der Senkschraube 192 der Grundkörper 144a nicht zwischen den Flächen 184a und 144a eingeklemmt. Auch insoweit bleibt also das radiale Spiel des Dichtungsrings 146 erhalten. Gemäß Figur 24 läßt sich auch gut erkennen, daß die Ringwand 144c in die Ausdrehungen 140 der Laufplatten 114 eingreift und an der angeschrägten Außenumfangsfläche 187 des Käfigs 112 anliegt, so daß die Laufplatten 114 in dem Käfig axial und radial gehalten sind. Es ist zu bemerken, daß die periphere Festlegung der Ringdichtungen auch durch Vorsprünge 189 der Ringdichtungen 146 gegen die Endleisten 184c (Figur 23) erfolgen kann. Dann bräuchte man die Nocken 188 trotzdem zur Befestigung der Endringe 144. Die Nocken 188 könnten dann aber peripheres Spiel gegenüber den Durchbrechungen 190 neben dem weiterhin notwendigen Radialspiel besitzen.

Mit den Ringdichtungen 146 allein ist das Dichtungsproblem noch nicht vollständig gelöst. Wie aus den Figuren 20 bis 23 sowie 26 und 27 ersichtlich, sind im Bereich der Spaltbegrenzungsflächen 186 in dem Käfig 112 auch Längsdichtungsleisten 194 mit einem Wurzelteil 194a und einem an der Welle 178 anliegenden Zungenteil 194b vorgesehen.

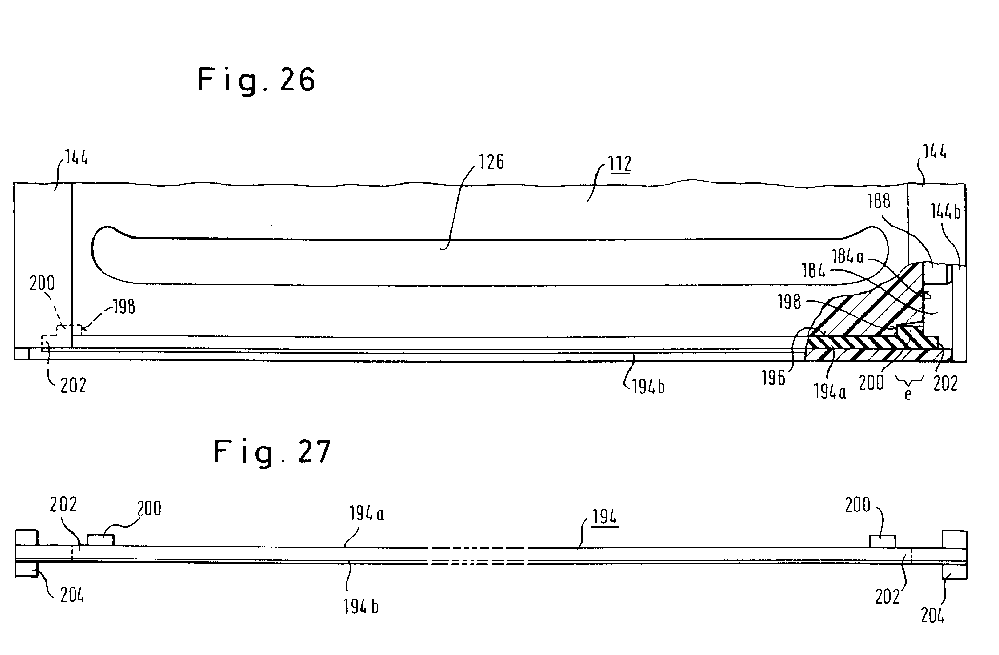

Der Wurzelteil 194a ist in einer axial verlaufenden und radial einwärts offenen Nut 196 des Käfigs 112 nahe dessen jeweiliger Spaltbegrenzungsfläche 186 eingesetzt. Die Nuten 196 erstrecken sich jeweils bis zu den axial gerichteten Flächen 184a und sind in ihren Endabschnitten e peripher erweitert, so daß Stützschultern 198 gebildet sind (Figur 26). Die Wurzelteile 194a der Längsdichtungsleisten 194 weisen in den axialen Endbereichen peripher vorspringende Vorsprünge 200 auf, die sich gegen die Stützschultern 198 anlegen. Die Längsdichtungsleisten 194 besitzen Fortsätze 202 gleichbleibenden Profils mit Wurzelteil 194a und Zungenteil 194b, welche über die Vorsprünge 200 hinaus axial in Richtung auf die Bodenwand 144b des Endrings 144 in die Ringausnehmung 144 hinein vorstehen, so daß, wie in Figur 23 dargestellt, der Dichtungsring 146 an dem Fortsatz 202 zur Anlage kommt. Die in peripherer Richtung weisenden Endflächen 146c sind an das Profil der Dichtleisten 194 angepaßt. Durch das gegenseitige Anliegen der Fortsätze 202 und der Dichtungsringe 146 im Bereich der Ausnehmung 184 ist der Zwischenraum zwischen der Welle 178 und dem Käfig 112 vollständig abgedichtet.

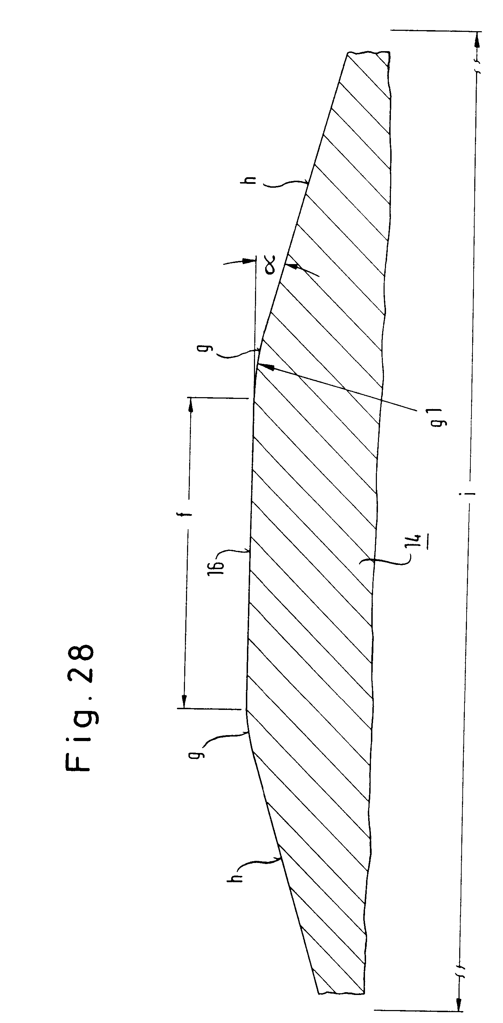

Die Figur 27 lässt die Längsdichtungsleiste 194 vor der Montage erkennen. Axial ausserhalb der Vorsprünge 200 sind an den beiden Enden einer Längsdichtungsleiste 194 Griffelemente 204 angebracht, die es bei der Montage der Längsdichtungsleisten 194 ermöglichen, deren zwischen den Vorsprüngen 200 gelegene Abschnitte so zu dehnen, dass die Vorsprünge 200 über die Schulterflächen 198 vorgeschoben und auf diesen aufgelagert werden können. Nach erfolgter Montage werden die Griffelemente 204 ausserhalb der Fortsätze 202 unter Belassung der Fortsätze 202 abgetrennt.

In Figur 28 erkennt man eine Laufplatte 14 wieder, deren Aussenfläche 16 in Figur 6 bereits schematisch angedeutet worden ist. Die Aussenfläche 16 weist einen mittleren geradlinig verlaufenden Längsabschnitt f auf, an den sich über Übergangsrundungen g mit einem Krümmungsradius gl jeweils ein axialer Längsabschnitt h anschliesst, der ebenfalls geradlinig ist. Der Längsabschnitt h schliesst mit dem Längsabschnitt f einen Winkel α von 35 Winkelminuten ein. Die Gesamtlänge der tragenden Kugelreihe ist mit i bezeichnet. Bezüglich der Grössenverhältnisse gilt folgendes:
Die Länge i der Tragkugelreihe beträgt ca. 100 % bis ca. 200 %, vorzugsweise ca. 130 % bis ca. 180 % des Durchmessers der Welle 178; die Länge des mittleren Längsabschnitts f beträgt ca. 2 % bis ca. 15 %, vorzugsweise ca. 5 % bis ca. 10 % des Durchmessers der Welle 178; der Krümmungsradius gl der Übergangsrundung g beträgt mehr als ca. 100 %, vorzugsweise mehr als ca. 150 % und beispielsweise 167 % bis 300 % des Durchmessers der Welle 178. Die Winkelneigung α beträgt ca. 25 bis 45 Winkelminuten, im Beispielsfall ca. 35 Winkelminuten.

Es hat sich gezeigt, dass bei Einhaltung der genannten Maße noch eine gewisse Kipp- oder Schaukelfähigkeit der Laufplatten 14 gewährleistet ist, andererseits aber im Normalbetrieb durch die Geradlinigkeit im mittleren Längsbereich f die Flächenpressung gegenüber einer umschliessenden Lagerbohrung soweit reduziert ist, dass der Verschleiß klein bleibt. Es hat sich weiter gezeigt, dass bei Einhaltung der angegebenen Maße im Bereich der bei Fluchtverlust zwischen Wellenachse und Käfigachse zu erwartenden Kippbewegungen die Annäherung diametral einander gegenüberliegender Laufplatten 14 innerhalb akzeptabler Grenzen bleibt und damit auch der Druck, den die Kugeln gegen die Welle 178 einerseits und gegen die Laufplatten 14 andererseits ausüben. Die Ausführungsform der Laufplatten nach Figur 28 ist bei allen Ausführungsformen des Linearkugellagers wie vorstehend beschrieben und darüber hinaus anwendbar.

Es ist zu beachten, dass die Laufplatten an ihrer Aussenfläche 16, wie in Figur 2 dargestellt, entsprechend der Innenumfangsfläche einer aufnehmenden Lagergehäusebohrung gerundet sind, so dass eine flächige Anlage der Laufplatten im Bereich des mittleren Längsabschnitts f an der Lagergehäusebohrung gewährleistet ist.

## Patentansprüche

1. Linearkugelbüchse (10) umfassend einen Käfig (12) mit einer Käfigachse und mit einer Mehrzahl von Kugelumläufen,
wobei jeder Kugelumlauf zwei zur Käfigachse im wesentlichen parallele Geradkugelreihen (22,24), nämlich eine Tragkugelreihe (22) und eine Rücklaufkugelreihe (24) und zwei die beiden Geradkugelreihen (22,24) verbindende Bogenkugelreihen (28) aufweist,
wobei weiter mindestens eine Geradkugelreihe (22,24) eines Kugelumlaufs nach radial aussen an einer Laufplatte (14) anliegt, welche in eine zugehörige Ausnehmung des Käfigs (12) eingesetzt ist und eine Aussenfläche (16) zur Anlage an einer Innenumfangsfläche einer den Käfig (12) aufnehmenden Lagergehäusebohrung besitzt,
wobei weiter an einer Innenfläche (18) der Laufplatte (14) ein Geradlaufbahnabschnitt (30,32) für zumindest eine Geradkugelreihe (22,24) des jeweiligen Kugelumlaufs ausgebildet ist und
wobei die jeweilige Tragkugelreihe (22) nach radial innen einen Schlitz (26) des Käfigs (12) teilweise durchdringt, um an einer von dem Käfig (12) zumindest teilweise umschlossenen Welle Anlage nehmen zu können,
dadurch gekennzeichnet,
dass die Ausnehmung (60) des Käfigs (12) zumindest an einem ihrer Enden und annähernd in Flucht mit einer Geradlaufbahn (62) des Käfigs (12) eine Füllschräge (66) besitzt, und/oder die Laufplatte (14) an ihrer Innenfläche im Bereich mindestens eines ihrer Enden in annähernder Flucht mit dem einen Geradlaufbahnabschnitt (30,32) eine Füllabschrägung (74) besitzt und wobei diese Füllschräge (66) und/oder diese Füllabschrägung (74) das Einfüllen von Kugeln (20) in den einen Geradlaufbahnabschnitt (30,32) dann gestatten, wenn die Laufplatte (14) an diesem einen Ende aus der Ausnehmung (60) ganz oder teilweise ausgehoben ist.

2. Linearkugelbüchse nach Anspruch 1,
dadurch gekennzeichnet,
dass an beiden Enden der Ausnehmung (60) Füllschrägen (66) und/oder dass an beiden Enden der Laufplatte (14) an deren Innenseite Füllabschrägungen (74) vorgesehen sind.

3. Linearkugelbüchse nach Anspruch 1 oder 2,
dadurch gekennzeichnet,
dass an der Innenfläche (18) der Laufplatte (14) nur ein tragender Geradlaufbahnabschnitt (30) für die Tragkugelreihe (22) angebracht ist und dass die Füllschräge (66) und/oder die Füllabschrägung (74) in Flucht mit diesem tragenden Geradlaufbahnabschnitt (30) angebracht ist.

4. Linearkugelbüchse nach Anspruch 1 oder 2,
dadurch gekennzeichnet,
dass an der Innenfläche der Laufplatte (14) eine geschlossene Laufbahn (30,32,36) für den jeweiligen Kugelumlauf ausgebildet ist, wobei die geschlossene Laufbahn (30,32,36) zwei Geradlaufbahnabschnitte (30,32) nämlich einen tragenden Geradlaufbahnabschnitt (30) für die Tragkugelreihe (22) und einen rückführenden Geradlaufbahnabschnitt (32) für die Rücklaufkugelreihe (24) und zwei die Geradlaufbahnabschnitte (30,32) verbindende Bogenlaufbahnabschnitte (36) aufweist.

5. Linearkugelbüchse nach Anspruch 4,
dadurch gekennzeichnet,
dass geradlinige Verlängerungen (30a, 32a) der Geradlaufbahnabschnitte (30,32) bis an die Enden der Laufplatte (14) im wesentlichen profilkonstant fortgesetzt sind unter Verschneidung mit den Bogenlaufbahnabschnitten (36).

6. Linearkugelbüchse nach Anspruch 4 oder 5,
dadurch gekennzeichnet,
dass die Füllschräge (66) und/oder die Füllabschrägung (74) in axialer Flucht mit einer rückführenden Geradlaufbahn (62) bzw. mit dem rückführenden Geradlaufbahnabschnitt (32) angeordnet sind.

7. Linearkugelbüchse nach einem der Ansprüche 4 bis 6,
dadurch gekennzeichnet,
dass der tragende Geradlaufbahnabschnitt (30), bezogen auf die Aussenfläche der Laufplatte (14), auf einem höheren und der rückführende Geradlaufbahnabschnitt (32), bezogen auf die Aussenfläche (16) der Laufbahn (14), auf einem tieferen Niveau liegt und die Bogenlaufbahnabschnitte (36) die entsprechenden Niveauunterschiede allmählich überwinden.

8. Linearkugelbüchse nach einem der Ansprüche 4 bis 7,
dadurch gekennzeichnet,
dass die Geradlaufbahnabschnitte (30,32) durch eine Mittelrippe (38) voneinander getrennt sind, welche ggfs. bis an die Enden der Laufplatte (14) hin im wesentlichen profilkonstant fortgesetzt ist und von den beiden Laufbahnabschnitten (36) durchquert ist.

9. Verfahren zum Einfüllen der Kugeln in einen Kugelumlauf einer Linearkugelbüchse, wobei die Linearkugelbüchse nach einem der Ansprüche 1 bis 8 ausgebildet ist, dadurch gekennzeichnet,
dass die Kugeln (20) bei einendig aus der Ausnehmung (60) ausgekippter Laufplatte (14) über eine Füllschräge (66) am offenen Ende der Ausnehmung (60) und/oder eine Füllabschrägung (74) am ausgekippten Ende der Laufplatte (14) hinweg in jeweils eine GeradLaufbahn (62) eingeführt werden und dass nach Vervollständigung der Kugeln (20) des Kugelumlaufs die Laufplatte (14) in Betriebsstellung zurückgekippt und in der Betriebsstellung gesichert wird.

10. Verfahren nach Anspruch 9,
dadurch gekennzeichnet,
dass während des Kugelfüllvorgangs das von der Einfüllstelle abgelegene Ende der Laufplatte (14) annähernd in Betriebsstellung innerhalb der Ausnehmung (60) gehalten ist.

11. Verfahren nach Anspruch 9 oder 10,
dadurch gekennzeichnet,
dass das von der Einfüllstelle abgelegene Ende der jeweiligen Laufplatte (14) während des Kugelfüllvorgangs durch einen topfförmigen Endring (44) in Betriebsstellung gehalten ist.

## Claims

1. A linear ball bearing (10) comprising a cage (12) with a cage axis and a plurality of recirculating ball assemblies,
each recirculating ball assembly comprises, substantally parallel with the cage axis, two parallel straight rows of balls (22, 24), namely a row (22) of load bearing balls and a row (24) of returning balls and, connecting the two straight rows of balls (22, 24), two curved rows of balls (28),
and furthermore in which at least one straight row of balls (22, 24) in a recirculating ball assembly bears radially outwardly against a race plate (14) rich is inserted into an associated recess in the cage (12) and has an outer surface (16) to bear on an inner peripheral surface of a bearing housing bore which accommodates the cage (12),
and in which furthermore a straight track portion (30, 32) for at least one straight row of balls (22, 24) of the relevant recirculating ball assembly is constructed on an inner surface (18) of the race plate (14), and
in which the relevant row (22) of load bearing balls, in a radially inward direction, partially penetrating a slot (26) in the cage (12) in order to be able to bear on a shaft rich is at least partially surrounded by the cage (12),
characterised in that at least at one of its ends and approximately in alignment with a straight path (62) of the cage (12), the recess (60) of the cage (12) has an inclined filler (66) and/or the race plate (14) has on its inner surface, in the region of at least one of its ends and approximately aligned with one straight track portion (30, 32) a chamfered filler (74), the inclined filler (66) and/or the filling chamfer (74) allowing balls (20) to be filled into the one straight track portion (30, 32) when the race plate (14) is wholly or partly lifted out of the recess (60) at this one end.

2. A linear ball bearing according to claim 1, characterised in that there are inclined fillers (66) at both ends of the recess (60) and/or in that filling chamfers (74) are provided on the inside face at both ends of the race plate (14).

3. A linear ball bearing according to claim 1 or 2, characterised in that on the inside face (18) of the race plate (14) there is only one load bearing straight track portion (40) for the row of load bearing balls (22) and in that the inclined filler (66) and/or filling chamfer (74) is aligned with this straight load bearing track portion (30).

4. A linear ball bearing according to claim 1 or 2, characterised in that on the inside face of the race plate (14) there is a closed track (30, 32, 36) for the relevant recirculating ball assembly, the closed track (30, 32, 36) comprising two straight track portions (30, 32), namely a load bearing straight track portion (30) for the load bearing row of balls (22) and a reversing straight track portion (32) for the returning row of balls (24) and two curved track portions (36) which connect the straight track portions (30, 32).

5. A linear ball bearing according to claim 4, characterised in that rectilinear extensions (30a, 32a) of the straight track portions (30, 32) extend as far as the ends of the race plate (14) in substantially a constant profile and intersect with the curved track portions (36).

6. A linear ball bearing according to claim 4 or 5, characterised in that the inclined filler (66) and/or the filling chamfer (74) are axially aligned with a returning straight track (62) or the returning straight track portion (32).

7. A linear ball bearing according to one of claims 4 to 6, characterised in that the load bearing straight track portion (30) is situated at a higher level in relation to the outer surface of the race plate (14) while the returning straight track portion (32) is situated at a lower level in relation to the outer surface (16) of the track (14), and in that the curved track portions (36) gradually overcome the corresponding differences in level.

8. A linear ball bearing according to one of claims 4 to 7, characterised in that the straight track portions (30, 32) are separated from one another by a central rib (38) which possibly extends as far as the ends of the race plate (14) in a substantially constant profile and is traversed by the two track portions (36).

9. A method of filling balls into a recirculating ball assembly in a linear ball bearing, the linear ball bearing being constructed in accordance with one of claims 1 to 8, characterised in that in the case of a race plate (14) which is tilted out of the recess (60) at one end, the balls (20) are introduced via an inclined filler (66) at the open end of the recess (60) and/or a filling chamfer (74) at the tilted out end of the race plate (14), in each case into a straight track (62), and in that once the balls (20) in the recirculating ball assembly are complete, the race plate (14) is tilted back into and is secured in the operative position.

10. A method according to claim 9, characterised in that during the ball filling process the end of the race plate (14) which is remote from the filling point is maintained approximately in the working position inside the recess (60).

11. A method according to claim 9 or 10, characterised in that during the ball filling process, the end of the relevant race plate (14) which is remote from the filling point is held in the operative position by a pot-shaped end ring (44).

## Revendications

1. Douille à billes linéaire (10) comportant une cage (12) avec un axe et avec plusieurs circuits de billes
dans laquelle chaque circuit de billes comporte deux rangées de billes rectilignes (22, 24) sensiblement parallèles à l'axe de la cage, à savoir une rangée de billes porteuses (22) et une rangée de billes (24) de retour ainsi que deux rangées de billes en arc (28), reliant les deux rangées de billes rectilignes (22, 24),
dans laquelle, en outre, au moins une rangée de billes rectiligne (22, 24) d'un circuit de billes s'applique radialement à l'extérieur contre une plaque de roulement (14) qui est montée dans une encoche correspondante de la cage (12) et possède une face extérieure (16) venant s'appliquer contre une surface périphérique intérieure d'un alésage du boîtier de la douille, logeant la cage (12),
dans laquelle, en outre, il est formé, sur une face intérieure (18) de la plaque de roulement (14), une partie de chemin de roulement rectiligne (30, 32) pour au moins une rangée de billes rectiligne (22, 23) du circuit de billes respectif et
dans laquelle la rangée de billes porteuses (22) respective traverse partiellement, radialement vers l'intérieur, une fente (26) de la cage (12), afin de pouvoir s'appliquer contre un arbre, entouré au moins partiellement par la cage (12),
caractérisée en ce que l'encoche (60) de la cage (12) possède au moins, à l'une de ses extrémités, une surface oblique de remplissage (66), sensiblement alignée avec un chemin de roulement rectiligne (62) de la cage (12) et/ou la plaque de roulement (14) possède, sur sa face intérieure dans la zone d'au moins l'une de ses extrémités, un chanfrein de remplissage (74), sensiblement aligné avec l'une des parties de chemin de roulement rectiligne (30, 32), cette surface oblique de remplissage (66) et/ou ce chanfrein de remplissage (74) permettant d'introduire les billes (20) dans une partie de chemin de roulement rectiligne (30, 32) lorsque la plaque de roulement (14) est totalement ou partiellement enlevée de l'encoche (60), à cette extrémité.

2. Douille à billes linéaire selon la revendication 1, caractérisée en ce qu'il est prévu, aux deux extrémités de l'encoche (60), des surfaces obliques de remplissage (66) et/ou aux deux extrémités de la plaque de roulement, sur son côté intérieur, des chanfreins de remplissage (74).

3. Douille à billes linéaire selon la revendication 1 ou 2, caractérisée en ce qu'il est prévu sur la face intérieure (18) de la plaque de roulement (14), uniquement une partie de chemin de roulement rectiligne (30) porteuse pour la rangée de billes porteuses (22) et en ce que la surface oblique de remplissage (66) et/ou le chanfrein de remplissage (74) est aligné avec cette partie de chemin de roulement rectiligne (30) porteuse.

4. Douille à billes linéaire selon la revendication 1 ou 2, caractérisée en ce qu'il est formé, sur la face intérieure de la plaque de roulement (14), un chemin de roulement (30, 32, 36) fermé pour le circuit de billes respectif, le chemin de roulement (30, 32, 36) fermé comportant deux parties de chemin de roulement rectilignes (30, 32), à savoir une partie porteuse (30) pour la rangée de billes porteuses (22) et une partie de retour (32) pour la rangée de billes de retour (24), ainsi que deux parties de chemin de roulement en arc (36), reliant les parties de chemin de roulement rectilignes (30, 32).

5. Douille à billes linéaire selon la revendication 4, caractérisée en ce que des prolongements (30a, 32a) rectilignes des parties de chemin de roulement rectilignes (30, 32) se prolongent jusqu'aux extrémités de la plaque de roulement (14), avec un profil sensiblement constant et coupent les parties de chemin de roulement en arc (36).

6. Douille à billes linéaire selon la revendication 4 ou 5, caractérisée en ce que la surface oblique de remplissage (66) et/ou le chanfrein de remplissage (74) sont alignés axialement avec un chemin de roulement rectiligne de retour (62) ou avec la partie de chemin de roulement rectiligne de retour (32).

7. Douille à billes linéaire selon l'une des revendications 4 à 6, caractérisée en ce que la partie de chemin de roulement rectiligne (30) porteuse se situe à un niveau plus haut que la face extérieure de la plaque de roulement (14) et la partie de chemin de roulement rectiligne de retour (32) se situe à un niveau plus bas que la face extérieure (16) du chemin de roulement (14) et en ce que les parties de chemin de roulement en arc (36) rattrapent progressivement les différences de niveau correspondantes.

8. Douille à billes linéaire selon l'une des revendications 4 à 7, caractérisée en ce que les parties de chemin de roulement rectilignes (30, 32) sont séparées l'une de l'autre par une nervure centrale (38) qui se prolonge éventuellement jusqu'aux extrémités de la plaque de roulement (14), avec un profil sensiblement constant et qui est traversée par les deux parties de chemin de roulement (36).

9. Procédé d'introduction des billes dans un circuit de billes d'une douille à billes linéaire, dans lequel la douille à billes linéaire est conçue suivant l'une des revendications 1 à 8, caractérisé en ce que les billes (20) sont introduites, lorsque la plaque de roulement (14) est basculée à une extrémité de l'encoche (60), par une surface oblique de remplissage (66), à l'extrémité ouverte de l'encoche (60) et/ou par un chanfrein de remplissage (74) à l'extrémité basculée de la plaque de roulement (14), dans un chemin de roulement rectiligne (62) et lorsque le circuit des billes (20) est complet, la plaque de roulement (14) est rebasculée en position de fonctionnement et bloquée dans cette position.

10. Procédé selon la revendication 9, caractérisé en ce que pendant l'opération de remplissage, l'extrémité de la plaque de roulement (14), éloignée du point d'introduction, est maintenue sensiblement en position de fonctionnement, à l'intérieur de l'encoche (60).

11. Procédé selon la revendication 9 ou 10, caractérisé en ce que l'extrémité de chaque plaque de roulement (14), éloignée du point d'introduction, est maintenue en position de fonctionnement, pendant l'opération de remplissage, par une bague terminale (44) en forme de pot.
